(19) Europäisches Patentamt / European Patent Office / Office européen des brevets

(11) **EP 4 543 025 A1**

(12) **EUROPEAN PATENT APPLICATION**
published in accordance with Art. 153(4) EPC

(43) Date of publication:
**23.04.2025 Bulletin 2025/17**

(21) Application number: **22946334.4**

(22) Date of filing: **17.06.2022**

(51) International Patent Classification (IPC):
**H04N 21/81** (2011.01)

(52) Cooperative Patent Classification (CPC):
**H04N 21/81**

(86) International application number:
**PCT/CN2022/099626**

(87) International publication number:
**WO 2023/240653 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **GAO, Shuo
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **AUDIO SIGNAL FORMAT DETERMINATION METHOD AND APPARATUS**

(57) The present disclosure belongs to the technical field of communications. Provided are an audio signal format determination method and apparatus, and a device and a storage medium. The method comprises: on the basis of a constraint condition of a terminal device, determining, from an audio format signal set that can be provided by the terminal device, an audio format signal to be selected for audio communication, wherein the audio format signal to be selected is used for providing an audio service for audio communication, and the audio format signal set comprises at least one audio format signal. The present disclosure provides a processing method for an "audio signal format determination" scenario, so as to determine an audio signal format according to a constraint condition of a terminal device, such that the accuracy of audio format signal determination is improved, and an optimal audio service based on the constraint condition is provided.

determining, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal

— 101

FIG. 1

EP 4 543 025 A1

**Description**

## TECHNICAL FIELD

The present disclosure relates to the field of communication technology, in particular to a method and an apparatus for audio signal format determination, a device and a storage medium.

## BACKGROUND

In a communication system, voice and audio communication services may be extended from narrowband signals to ultra-wideband or even full-band services, which may meet increasing demands of users for high-quality audio. However, a terminal device can only determine an audio format signal by means of predefined settings, resulting in lower accuracy in audio format signal determination and inability to provide an optimal audio service that matches the terminal device. Therefore, there is an urgent demand on a method for "audio signal format determination" to determine an audio signal format based on a constraint condition of the terminal device, improving an accuracy of the audio format signal determination, and providing the optimal audio service based on the constraint condition.

## SUMMARY

The present disclosure provides a method and an apparatus for audio signal format determination, a device and a storage medium, capable of determining an audio signal format based on a constraint condition of a terminal device, improving an accuracy of audio format signal determination, and providing an optimal audio service based on the constraint condition.

In an aspect, the present disclosure provides in some embodiments a method for audio signal format determination. The method is performed by a terminal device and includes:

determining, based on a constraint condition of the terminal device, an audio format signal to be selected for audio communication from an audio format signal set that is able to be provided by the terminal device, in which, the audio format signal to be selected is configured to provide an audio service of the audio communication, the audio format signal set includes at least one audio format signal.

Optionally, in one embodiment of the present disclosure, the constraint condition of the terminal device includes at least one of:

> a hardware resource condition of the terminal device;
> a software resource condition of the terminal device;
> a network environment condition where the terminal device is; or
> an electricity quantity of the terminal device.

Optionally, in one embodiment of the present disclosure, the method further includes:
determining, based on a microphone number and/or a microphone type configured by the terminal device, the audio format signal set that is able to be provided by the terminal device.

Optionally, in one embodiment of the present disclosure, determining, based on the microphone number and/or the microphone type configured by the terminal device, the audio format signal set that is able to be provided by the terminal device includes:

> determining the audio format signal set that is able to be provided by the terminal device as a first audio format signal set in response to the microphone number configured by the terminal device being at least three;
> in which, an audio format signal in the first audio format signal set includes at least one of:
>
>> a mono signal;
>> a stereo signal;
>> a metadata-assisted spatial audio signal;
>> a scene-based first-order ambisonics (FOA) signal;
>> a scene-based high-order ambisonics (HOA) signal; or
>> a multi-channel signal.

Optionally, in one embodiment of the present disclosure, determining, based on the microphone number and/or the microphone type configured by the terminal device, the audio format signal set that is able to be provided by the terminal device includes:

determining the audio format signal set that is able to be provided by the terminal device as a second audio format signal set in response to a microphone configured by the terminal device comprising at least one external audio acquisition device;

in which, an audio format signal in the second audio format signal set includes at least one of:

a mono signal;
a stereo signal;
a binaural signal;
an objective signal;
a metadata-assisted spatial audio signal;
a scene-based FOA signal;
a scene-based HOA signal; or
a multi-channel signal.

Optionally, in one embodiment of the present disclosure, determining, based on the constraint condition of the terminal device, the audio format signal to be selected for the audio communication from the audio format signal set that is able to be provided by the terminal device includes:

obtaining a score corresponding to the constraint condition based on a condition parameter corresponding to the constraint condition of the terminal device and a weight coefficient corresponding to the constraint condition, in which the constraint condition includes a hardware resource condition of the terminal device, a software resource condition of the terminal device, a network environment condition where the terminal device is, or an electricity quantity of the terminal device;

determining, based on the score, the audio format signal to be selected for the audio communication from the audio format signal set that is able to be provided by the terminal device.

Optionally, in one embodiment of the present disclosure, determining, based on the score, the audio format signal to be selected for the audio communication from the audio format signal set that is able to be provided by the terminal device includes:

determining that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold; or

determining that the audio format signal to be selected for the audio communication determined from the first audio format signal set is a mono signal in response to the audio format signal set that is able to be provided by the terminal device being the first audio format signal set, and the score being less than the first score threshold.

Optionally, in one embodiment of the present disclosure, determining, based on the score, the audio format signal to be selected for the audio communication from the audio format signal set that is able to be provided by the terminal device includes:

determining that the audio format signal to be selected for the audio communication determined from a second audio format signal set is a scene-based HOA signal in response to the audio format signal set that is able to be provided by the terminal device being the second audio format signal set, and the score being greater than a second score threshold; or

determining that the audio format signal to be selected for the audio communication determined from the second audio format signal set is a mono signal in response to the audio format signal set that is able to be provided by the terminal device being the second audio format signal set, and the score being less than the second score threshold.

Optionally, in one embodiment of the present disclosure, determining, based on the constraint condition of the terminal device, the audio format signal to be selected for the audio communication from the audio format signal set that is able to be provided by the terminal device includes:

determining, based on an electricity quantity of the terminal device, the audio format signal to be selected for the audio communication from the audio format signal set that is able to be provided by the terminal device.

Optionally, in one embodiment of the present disclosure, determining, based on the electricity quantity of the terminal device, the audio format signal to be selected for the audio communication from the audio format signal set that is able to be provided by the terminal device includes:

determining that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold; or

determining that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold.

Optionally, in one embodiment of the present disclosure, determining, based on the electricity quantity of the terminal device, the audio format signal to be selected for the audio communication from the audio format signal set that is able to be provided by the terminal device includes:

determining that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold; or
determining that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold.

In another aspect, the present disclosure provides in some embodiments an apparatus for audio signal format determination. The apparatus includes:
a determination module, configured to determine, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal.

In a third aspect, the present disclosure provides in some embodiments a terminal device, including a processor and a memory. The memory is configured to store therein a computer program, and the processor is configured to execute the computer program stored in the memory, causing the device to implement the method provided in the above aspect embodiment.

In a fourth aspect, the present disclosure provides in some embodiments a communication apparatus, including a processor and an interface circuit, in which,

the interface circuit is configured to receive a code instruction and transmit the code instruction to the processor; and
the processor is configured to run the code instruction to implement the method provided in the above aspect embodiment.

In a fifth aspect, the present disclosure provides in some embodiments a computer-readable storage medium storing therein instructions. When the instructions are executed, the method provided in the above aspect embodiment is implemented.

In a word, in embodiments of the present disclosure, based on a constraint condition of the terminal device, the audio format signal to be selected for audio communication is determined from the audio format signal set that is able to be provided by the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. The present disclosure provides a processing method for a situation of "audio signal format determination" to determine the audio signal format based on the constraint condition of the terminal device, improving an accuracy of audio format signal determination, and providing an optimal audio service based on the constraint condition.

## BRIEF DESCRIPTION OF THE DRAWINGS

The above-mentioned and/or other aspects and advantages of the present disclosure may become apparent and easily understandable in the following description in conjunction with the drawings.

FIG. 1 is a flowchart showing a method for audio signal format determination according to an embodiment of the present disclosure.

FIG. 2 is a flowchart showing a method for audio signal format determination according to another embodiment of the present disclosure.

FIG. 3 is a flowchart showing a method for audio signal format determination according to yet another embodiment of the present disclosure.

FIG. 4 is an illustrative schematic diagram showing a terminal device according to still yet another embodiment of the present disclosure.

FIG. 5 is a flowchart showing a method for audio signal format determination according to still yet another embodiment of the present disclosure.

FIG. 6 is an illustrative schematic diagram showing a terminal device according to still yet another embodiment of the present disclosure.

FIG. 7 is a flowchart showing a method for audio signal format determination according to still yet another embodiment of the present disclosure.

FIG. 8 is a flowchart showing a method for audio signal format determination according to still yet another embodiment of the present disclosure.

FIG. 9 is a flowchart showing a method for audio signal format determination according to still yet another embodiment of the present disclosure.

FIG. 10 is a flowchart showing a method for audio signal format determination according to still yet another embodiment of the present disclosure.

FIG. 11 is a flowchart showing a method for audio signal format determination according to still yet another embodiment of the present disclosure.

FIG. 12 is a flowchart showing a method for audio signal format determination according to still yet another embodiment of the present disclosure.

FIG. 13 is a block diagram showing an apparatus for audio signal format determination according to still yet another embodiment of the present disclosure.

FIG. 14 is a block diagram of a terminal device according to an embodiment of the present disclosure.

## DETAILED DESCRIPTION

The present disclosure will be described hereinafter in details in combination with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" and "in case of" may be construed as "when", "upon" or "in response to determining".

Network elements or network functions involved in the embodiments of the present disclosure may be implemented through separate hardware devices, or through software in the hardware devices, which will not be particularly defined herein.

In the communication system, the first generation mobile communication technology (1G) began in the 1980s. The 1G is the first generation wireless cellular technology and is an analog mobile communication network. When the 1G is upgraded to the 2nd-generation wireless telephone technology (2G), the terminal device may be transferred from analog communication to digital communication. For example, in the 2G, a GSM network standard may be adopted, and a voice coder may provide single-channel narrowband voice services by adaptive multi-rate (AMR) voice coder, enhanced full rate codec (enhanced full rate speed encoding, EFR), full rate (FR) codec, or half rate (HR) codec communication. The third generation mobile communication technology (3rd-Generation, 3G) mobile communication system is proposed by the International Telecommunication Union (ITU) for the 2000 International Mobile Communication. In an example, different operators may adopt different encoding manners, for example, may adopt time division-synchronous code division multiple access (TD-SCDMA), may also adopt code division multiple access (code division multiple access 2000, CDMA2000), and may also adopt wideband code division multiple access (W-CDMA), the voice coder of which may provide single-channel broadband voice services by a new variable rate multi-mode wideband (AMR-WB) voice codec. The 4th generation mobile communication technology (4G) is a better improvement on the basic of the 3G technology. Both data and voice adopt a manner of the Internet Protocol (IP) to provide a real-time high-definition voice (HD+ Voice) service for voice and audio. The adopted audio encoding (enhanced voice service, EVS) codec may take into account high-quality compression of the voice and audio.

In an embodiment of the present disclosure, the voice and audio communication services provided above are extended from narrowband signals to ultra-wideband or even full-band services, but both of which are still monophonic services, and users have increasing demands on high-quality audio. Increased, compared to mono audio, stereo audio has a sense of orientation and distribution for each sound source, and may improve clarity. With increase in transmission bandwidth and upgrade of terminal signal acquisition devices, improvement of signal processor performance, and upgrade of terminal playback devices, three signal formats such as channel-based signals, objective-based signals, and scene-based signals may provide three-dimension audio services. Immersive voice and audio services (IVAS) codecs being standardized by the 3rd Generation Partnership Project (3GPP) Media Working Group (SA4) may support codec requirements of the above three signal formats. The specific signal formats of the three signal formats includes: channel-based signals including a mono signal, a stereo signal, a binaural signal, a 5.1 surround sound signal, a 7.1 surround sound signal, a 5.1.4 surround sound signal, a 7.1.4 surround sound signal, where .4 represents a height channel signal (Height), scene-based signals including first-order ambisonics (FOA), second-order ambisonics (2nd-order ambisonics, HOA2), third-order ambisonics (3rd-Order ambisonics, HOA3), or objective-based signals including audio data and metadata. In addition, the IVAS also supports metadata-assisted spatial audio (MASA) signals. The terminal device that can support the three-dimension audio services may include, but is not limited to, a mobile phone, a computer, a pad, a conference system equipment, an augmented reality (AR)/virtual reality (VR) equipment, a car, etc.

A method and an apparatus for audio signal format determination, a device and a storage medium provided in embodiments of the present disclosure will be described in details hereinafter in combination with the drawings.

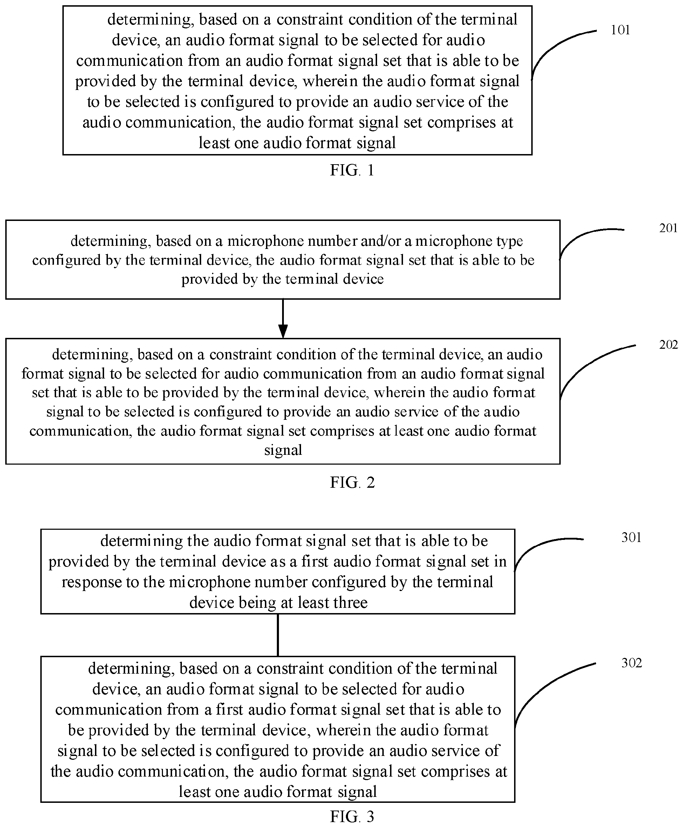

FIG. 1 is a flowchart of a method for audio signal format determination according to an embodiment of the present disclosure. The method is performed by a terminal device. As shown in FIG. 1, the method may include the following step.

At step 101, an audio format signal to be selected for audio communication is determined from an audio format signal set that is able to be provided by the terminal device based on a constraint condition of the terminal device. The audio format signal to be selected is configured to provide an audio service of the audio communication, the audio format signal set includes at least one audio format signal.

It should be appreciated that, in an embodiment of the present disclosure, the terminal device may be a device for providing voice and/or data connectivity to a user. The terminal device may communicate with one or more core networks via a radio access network (RAN). The terminal device may be an Internet of Things (IoT) terminal, e.g., a sensor device or a mobile phone (also called as cellular phone), or a computer having the IoT terminal, e.g., an immobile, portable, pocket-sized, handheld, built-in or vehicle-mounted device. For example, the terminal device may be a station (STA), a subscriber unit, a subscriber station, a mobile station, a mobile, a remote station, an access point, a remote terminal, an access terminal, a user terminal or a user agent. The terminal device may also be a device for an unmanned aerial vehicle. The terminal device may also be a vehicle-mounted device, e.g., an electronic control unit having a wireless communication function, or a wireless terminal coupled to an external electronic control unit. Alternatively, the terminal device may also be a roadside device, e.g., a street lamp or a signal lamp having a wireless communication function, or any other roadside devices.

In one embodiment of the present disclosure, the constraint condition of the terminal device includes at least one of:

a hardware resource condition of the terminal device;
a software resource condition of the terminal device;
a network environment condition where the terminal device is; or
an electricity quantity of the terminal device.

In one embodiment of the present disclosure, the method further includes:
determining, based on a microphone number and/or a microphone type configured by the terminal device, the audio format signal set that is able to be provided by the terminal device.

In one embodiment of the present disclosure, determining, based on the microphone number and/or the microphone type configured by the terminal device, the audio format signal set that is able to be provided by the terminal device includes:

determining the audio format signal set that is able to be provided by the terminal device as a first audio format signal set in response to the microphone number configured by the terminal device being at least three,;

in which, an audio format signal in the first audio format signal set includes at least one of:

a mono signal;
a stereo signal;
a metadata-assisted spatial audio signal;
a scene-based first-order ambisonics (FOA) signal;
a scene-based high-order ambisonics (HOA) signal; or
a multi-channel signal.

In one embodiment of the present disclosure, determining, based on the microphone number and/or the microphone type configured by the terminal device, the audio format signal set that is able to be provided by the terminal device includes:

determining the audio format signal set that is able to be provided by the terminal device as a second audio format signal set in response to a microphone configured by the terminal device comprising at least one external audio acquisition device;

in which, an audio format signal in the second audio format signal set includes at least one of:

a mono signal;
a stereo signal;
a binaural signal;
an objective signal;
a metadata-assisted spatial audio signal;
a scene-based FOA signal;
a scene-based HOA signal; or
a multi-channel signal.

In one embodiment of the present disclosure, determining, based on the constraint condition of the terminal device, the audio format signal to be selected for the audio communication from the audio format signal set that is able to be provided by the terminal device includes:

obtaining a score corresponding to the constraint condition based on a condition parameter corresponding to the constraint condition of the terminal device and a weight coefficient corresponding to the constraint condition, in which the constraint condition includes at least two of a hardware resource condition of the terminal device, a software resource condition of the terminal device, a network environment condition where the terminal device is, or an electricity quantity of the terminal device;

determining, based on the score, the audio format signal to be selected for the audio communication from the audio format signal set that is able to be provided by the terminal device.

Illustratively, determining, based on the score, the audio format signal to be selected for the audio communication from the audio format signal set that is able to be provided by the terminal device includes:

determining that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold; or

determining that the audio format signal to be selected for the audio communication determined from the first audio format signal set is a mono signal in response to the audio format signal set that is able to be provided by the terminal device being the first audio format signal set, and the score being less than the first score threshold.

Furthermore, in one embodiment of the present disclosure, determining, based on the score, the audio format signal to be selected for the audio communication from the audio format signal set that is able to be provided by the terminal device includes:

determining that the audio format signal to be selected for the audio communication determined from a second audio format signal set is a scene-based HOA signal in response to the audio format signal set that is able to be provided by the terminal device being the second audio format signal set, and the score being greater than a second score threshold; or

determining that the audio format signal to be selected for the audio communication determined from the second audio format signal set is a mono signal in response to the audio format signal set that is able to be provided by the terminal device being the second audio format signal set, and the score being less than the second score threshold.

**In** one embodiment of the present disclosure, determining, based on the constraint condition of the terminal device, the audio format signal to be selected for the audio communication from the audio format signal set that is able to be provided by the terminal device includes:

determining, based on an electricity quantity of the terminal device, the audio format signal to be selected for the audio communication from the audio format signal set that is able to be provided by the terminal device.

In one embodiment of the present disclosure, determining, based on the electricity quantity of the terminal device, the audio format signal to be selected for the audio communication from the audio format signal set that is able to be provided by the terminal device includes:

determining that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold; or

determining that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold.

In one embodiment of the present disclosure, determining, based on the electricity quantity of the terminal device, the audio format signal to be selected for the audio communication from the audio format signal set that is able to be provided by the terminal device includes:

determining that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold; or

determining that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold.

In a word, in embodiments of the present disclosure, based on a constraint condition of the terminal device, the audio format signal to be selected for audio communication is determined from the audio format signal set that is able to be provided by the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 2 is a flowchart of a method for audio signal format determination according to an embodiment of the present disclosure. The method is performed by a terminal device. As shown in FIG. 2, the method may include the following steps.

At step 201, the audio format signal set that is able to be provided by the terminal device is determined based on a microphone number and/or a microphone type configured by the terminal device.

At step 202, an audio format signal to be selected for audio communication is determined from an audio format signal set that is able to be provided by the terminal device based on a constraint condition of the terminal device. The audio format signal to be selected is configured to provide an audio service of the audio communication, the audio format signal set includes at least one audio format signal.

In an embodiment of the present disclosure, the microphone number refers to the number of microphones configured for the terminal device. The microphone may be a microphone provided in the terminal device, or may be a microphone external to the terminal device. The number of microphones does not refer to a fixed number. For example, the number of microphones configured for the terminal device changes, the number of microphones may also change accordingly.

For example, in an embodiment of the present disclosure, the microphone type refers to at least one type corresponding to at least one microphone configured for the terminal device. Different microphones may correspond to different microphone types, and different microphones may also correspond to the same microphone type.

In an embodiment of the present disclosure, the audio format signal set refers to a collection of at least one audio format signal. The audio format signal set does not refer to a fixed set. For example, the number of audio format signals included in the audio format signal set changes, the audio format signal set may also change accordingly. For example, when the audio format signals included in the audio format signal set change, the audio format signal set may also change accordingly.

In an embodiment of the present disclosure, the constraint condition refers to a condition used to determine the audio format signal to be selected for audio communication. The constraint condition does not specify a fixed condition. The constraint condition may include at least one of:

a hardware resource condition of the terminal device;
a software resource condition of the terminal device;
a network environment condition where the terminal device is; or
an electricity quantity of the terminal device.

In an embodiment of the present disclosure, the terminal device may obtain the constraint condition of the terminal device using a dedicated extraction module.

Further, in an embodiment of the present disclosure, the terminal devices may determine the audio format signal set that is able to be provided by the terminal device based on the microphone number and/or the microphone type configured by the terminal device. The terminal devices may determine, based on the constraint condition of the terminal device, the audio format signal to be selected for audio communication from the audio format signal set that is able to be provided by the terminal device. The audio format signal to be selected is configured to provide the audio service of the audio communication, the audio format signal set includes the at least one audio format signal. Different audio format signals may correspond to different numbers of audio data channels.

In a word, in embodiments of the present disclosure, the audio format signal set that is able to be provided by the terminal device is determined based on a microphone number and/or a microphone type configured by the terminal device. The audio format signal to be selected for audio communication is determined from the audio format signal set that is able to be provided by the terminal device based on the constraint condition of the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. In an embodiment of the present disclosure, the solution for determining the audio format signal set is specifically described, which may improve the accuracy of audio format signal determination. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 3 is a flowchart of a method for audio signal format determination according to an embodiment of the present disclosure. The method is performed by a terminal device. As shown in FIG. 3, the method may include the following steps.

At step 301, an audio format signal set that is able to be provided by the terminal device is determined as a first audio format signal set in response to a microphone number configured by the terminal device being at least three.

An audio format signal in the first audio format signal set includes at least one of:

a mono signal;
a stereo signal;
a metadata-assisted spatial audio signal;
a scene-based first-order ambisonics (FOA) signal;
a scene-based high-order ambisonics (HOA) signal; or
a multi-channel signal.

At step 302, an audio format signal to be selected for audio communication is determined from the first audio format signal set that is able to be provided by the terminal device based on a constraint condition of the terminal device. The audio format signal to be selected is configured to provide an audio service of the audio communication, the audio format signal set includes at least one audio format signal.

In an embodiment of the present disclosure, the first audio format signal set refers to an audio format signal set determined by the terminal device in a case that the number of microphones configured for the terminal device is at least three. The term "first" in the first audio format signal set is only used to distinguish from other audio format signal sets, and the first audio format signal set does not specifically refer to a fixed set. For example, the first audio format signal set may include the mono signal, the stereo signal, and the metadata-assisted spatial audio signal, and the first audio format signal set may also include the mono signal, the stereo signal, and the multi-channel signal.

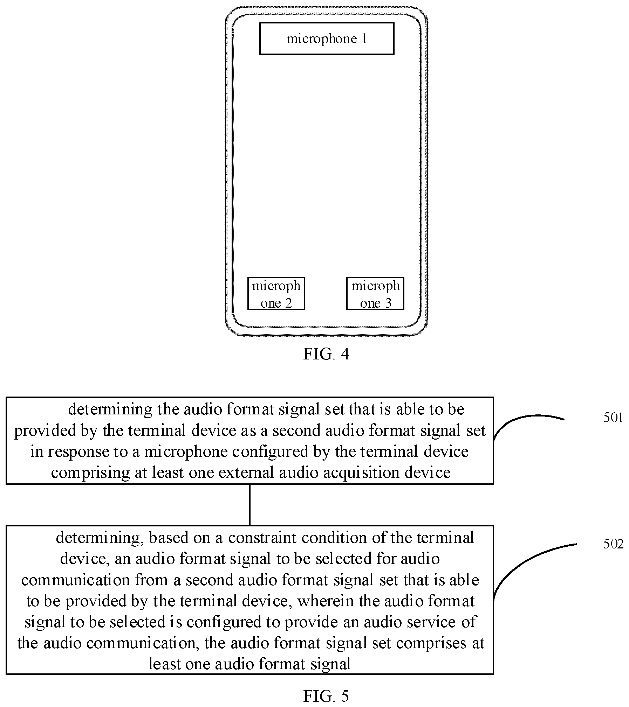

For example, in an embodiment of the present disclosure, the number of microphones configured for the terminal device may be, for example, three. The three microphones may be, for example, three microphones built into the terminal device. At this case, an illustrative schematic diagram of the terminal device may be shown in FIG. 4. One microphone is arranged on the upper portion of the terminal device, and two microphones are arranged on the bottom portion of the terminal device. The terminal device determines that the first audio format signal set that can be provided by the terminal device may include, for example, the mono signal, the stereo signal, and the metadata-assisted spatial audio signal.

For example, in one embodiment of the present disclosure, the microphone number configured for the terminal device may be, for example, one. The terminal device determines that the first audio format signal set that can be provided by the terminal device may, for example, only include the mono signal.

For example, in one embodiment of the present disclosure, the high-order ambisonics (HOA) signal includes, but is not limited to, a second-order ambisonics signal, a third-order ambisonics signal, and the like.

In a word, in embodiments of the present disclosure, the audio format signal set that is able to be provided by the terminal device is determined as the first audio format signal set in response to the microphone number configured by the terminal device being at least three. The audio format signal to be selected for audio communication is determined from the first audio format signal set that is able to be provided by the terminal device based on the constraint condition of the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. In an embodiment of the present disclosure, the solution for determining the first audio format signal set is specifically described, which may improve the accuracy of determining the audio format signal from the first audio format signal set that is able to be provided by terminal device. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 5 is a flowchart of a method for audio signal format determination according to an embodiment of the present disclosure. The method is performed by a terminal device. As shown in FIG. 5, the method may include the following steps.

At step 501, an audio format signal set that is able to be provided by the terminal device is determined as a second audio format signal set in response to a microphone configured by the terminal device comprising at least one external audio acquisition device.

An audio format signal in the second audio format signal set includes at least one of:

a mono signal;
a stereo signal;
a binaural signal;
an objective signal;
a metadata-assisted spatial audio signal;
a scene-based FOA signal;
a scene-based HOA signal; or
a multi-channel signal.

At step 502, an audio format signal to be selected for audio communication is determined from the second audio format signal set that is able to be provided by the terminal device based on a constraint condition of the terminal device. The audio format signal to be selected is configured to provide an audio service of the audio communication, the audio format signal set includes at least one audio format signal.

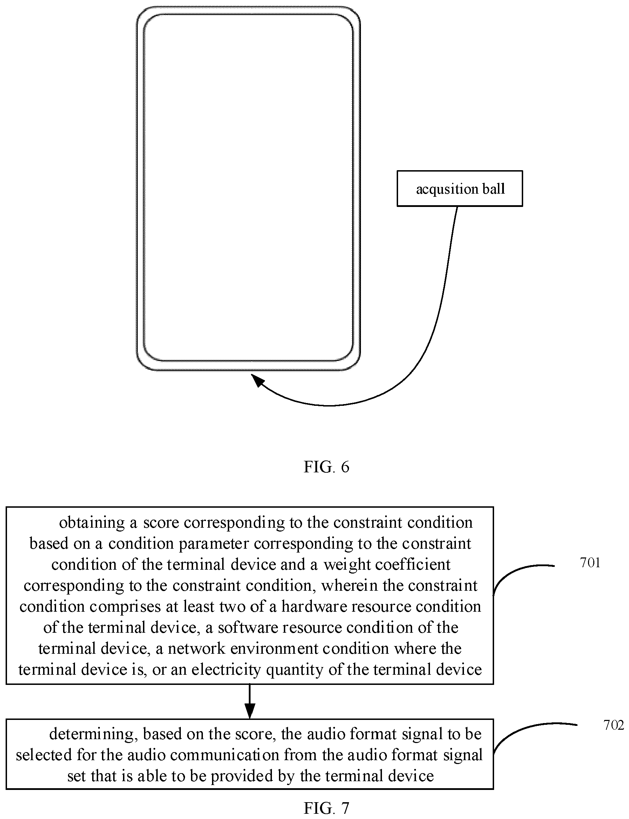

For example, in an embodiment of the present disclosure, the number of microphones configured for the terminal device may be, for example, one. At this case, an illustrative schematic diagram of the terminal device may be shown in FIG. 6. The at least one external audio acquisition device may be, for example, an acquisition ball. The terminal device determines that the audio format signal set that is able to be provided by the terminal device may be, for example, the second audio format signal set. The second audio format signal set may include, for example, the mono signal, the stereo signal, the scene-based FOA signal, the scene-based HOA signal, and the metadata-assisted spatial audio signal.

For example, in an embodiment of the present disclosure, the microphone provided for the terminal device may include, for example, the external audio acquisition device and one microphone built into the terminal device. The at least one external audio acquisition device may be, for example, the acquisition ball. The terminal device determines that the audio format signal set that is able to be provided by the terminal device may be, for example, the second audio format signal set.

In a word, in embodiments of the present disclosure, the audio format signal set that is able to be provided by the terminal device is determined as the second audio format signal set in response to the microphone configured for the terminal device including the at least one external audio acquisition device. The audio format signal to be selected for audio communication is determined from the second audio format signal set that is able to be provided by the terminal device based on the constraint condition of the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. In an embodiment of the present disclosure, the solution for determining the second audio format signal set is specifically described, which may improve the accuracy of determining the audio format signal from the second audio format signal set that is able to be provided by terminal device. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 7 is a flowchart of a method for audio signal format determination according to an embodiment of the present disclosure. The method is performed by a terminal device. As shown in FIG. 7, the method may include the following steps.

At step 701, a score corresponding to the constraint condition is obtained based on a condition parameter corresponding to the constraint condition of the terminal device and a weight coefficient corresponding to the constraint condition, in which the constraint condition includes a hardware resource condition of the terminal device, a software resource condition of the terminal device, a network environment condition where the terminal device is, or an electricity quantity of the terminal device.

At step 702, the audio format signal to be selected for the audio communication from the audio format signal set that is able to be provided by the terminal device is determined based on the score, .

In an embodiment of the present disclosure, different constraint conditions may correspond to different weight coefficients, or may correspond to the same weight coefficient. For example, a weight coefficient corresponding to the hardware resource condition of the terminal device may be 0.8, a weight coefficient corresponding to the software resource condition of the terminal device may be 0.6, and a weight coefficient corresponding to the network environment condition where the terminal device is may be 0.7. For another example, the weight coefficient corresponding to the hardware resource condition of the terminal device may be 0.8, the weight coefficient corresponding to the software resource condition of the terminal device may be 0.8, and the weight coefficient corresponding to the network environment condition where the terminal device is may be 0.7.

In an embodiment of the present disclosure, the condition parameter does not specifically refer to a certain fixed parameter. The constraint condition may be, for example, the network environment condition where the terminal device is. In a case that a network environment changes, the condition parameter may also change accordingly.

In an embodiment of the present disclosure, the score corresponding to the constraint condition does not specifically refer to a fixed score. For example, in a case that the condition number included in the constraint condition changes, the score corresponding to the constraint condition may also change accordingly. For example, in a case that a condition type of the constraint condition changes, the score corresponding to the constraint condition may also change accordingly.

For example, in an embodiment of the present disclosure, in a case that the terminal device obtains the score corresponding to the constraint condition, the terminal device may obtain the score corresponding to the constraint condition through a decision module. For example, a condition parameter corresponding to the hardware resource condition of the terminal device may be, for example, 0.7. A condition parameter corresponding to the software resource condition of the terminal device may be, for example, 1.0. A condition parameter corresponding to the network environment condition where the terminal device is may be, for example, 0.7. A condition parameter corresponding to the electricity quantity of the terminal device may be, for example, 1.0. A weight coefficient corresponding to the hardware resource condition of the terminal device may be, for example, 0.8. A weight coefficient corresponding to the software resource condition of the terminal device may be, for example, 0.6. A weight coefficient corresponding to the network environment condition of the terminal device may be, for example, 0.7. A weight coefficient corresponding to the electricity quantity of the terminal device may be, for example, 0.9. The score corresponding to the constraint condition obtained by the terminal device may be, for example:

$$f=0.7*0.8+1.0*0.6+0.7*0.7+1.0*0.9=0.56+0.6+0.49+0.9=2.55.$$

The terminal device may determine, based on the score 2.55, the audio format signal to be selected for audio communication from the audio format signal set that is able to be provided by the terminal device.

In a word, in an embodiment of the present disclosure, the score corresponding to the constraint condition is obtained based on the condition parameter corresponding to the constraint condition of the terminal device and the weight coefficient corresponding to the constraint condition, in which the constraint condition includes the hardware resource condition of the terminal device, the software resource condition of the terminal device, the network environment condition where the terminal device is, or the electricity quantity of the terminal device. The audio format signal to be selected for the audio communication is determined from the audio format signal set that is able to be provided by the terminal device based on the score. In an embodiment of the present disclosure, the audio format signal to be selected for audio communication may be determined the condition parameter corresponding to the constraint condition of the terminal device and the weight coefficient corresponding to the constraint condition, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. The present disclosure provides a processing method for a situation of "audio signal format determination" to determine the audio signal format based on the constraint condition of the terminal device, improving an accuracy of audio format signal determination, and providing an optimal audio service based on the constraint condition.

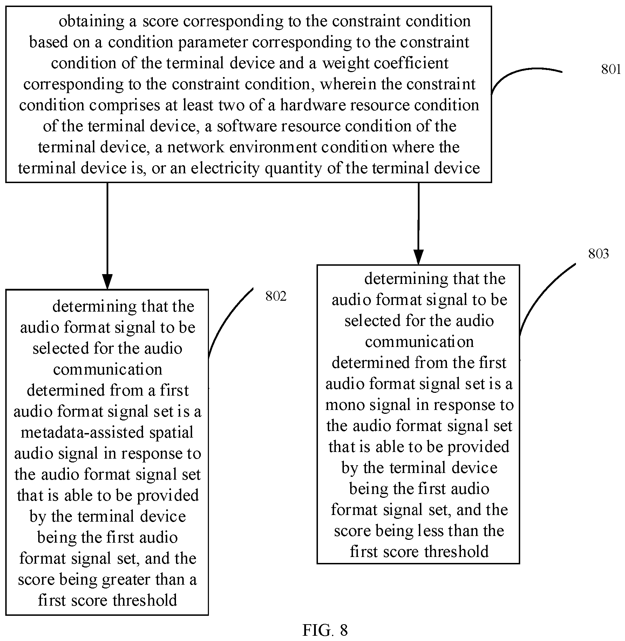

FIG. 8 is a flowchart of a method for audio signal format determination according to an embodiment of the present disclosure. The method is performed by a terminal device. As shown in FIG. 8, the method may include the following steps.

At step 801, a score corresponding to the constraint condition is obtained based on a condition parameter corresponding to the constraint condition of the terminal device and a weight coefficient corresponding to the constraint condition, in which the constraint condition includes at least two of a hardware resource condition of the terminal device, a software resource condition of the terminal device, a network environment condition where the terminal device is, or an electricity quantity of the terminal device.

One of the following steps is performed.

At step 802, it is determined that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold.

At step 803, it is determined that the audio format signal to be selected for the audio communication determined from the first audio format signal set is a mono signal in response to the audio format signal set that is able to be provided by the terminal device being the first audio format signal set, and the score being less than the first score threshold.

In an embodiment of the present disclosure, the first score threshold refers to a score threshold for the audio format signal to be selected for audio communication determined in the first audio format signal set. The term "first" in the first score threshold is only used to distinguish it from other score thresholds, and does not specifically refer to a fixed score threshold.

In an embodiment of the present disclosure, in a case the score is equal to the first score threshold, the terminal device may determine the audio format signal to be selected for audio communication according to the solution with the score greater than the first score threshold, or may also determine the audio format signal to be selected for audio communication according to the solution with the score less than the first score threshold. For example, in response to the audio format signal set that is able to be provided by the terminal device being the first audio format signal set, and the score being equal to the first score threshold, the terminal device may determine that the audio format signal to be selected for the audio communication determined from the first audio format signal set may be, for example, the metadata-assisted spatial audio signal, or the mono signal.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 2.55. The first score threshold may be, for example, 2. The first audio format signal set may include, for example, the mono signal, the stereo signal, and the metadata-assisted spatial audio signal. In a case that the score 2.55 is greater than the first score threshold 2, the audio format signal to be selected for audio communication determined by the terminal device from the first audio format signal set may be, for example, the metadata-assisted spatial audio signal. That is, in a case that the terminal device has a hardware processor with better performance, richer software resources, and a better network environment, audio information output by the terminal device tends to select an audio format signal with a larger number of audio data channels.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 1.55. The first score threshold may be, for example, 2. The first audio format signal set may include, for example, the mono signal, the stereo signal, and the metadata-assisted spatial audio signal. In a case that the score 1.55 is less than the first score threshold 2, the audio format signal to be selected for audio communication determined by the terminal device from the first audio format signal set may be, for example, the mono signal. That is, in a case that the terminal device has a hardware processor with poor performance, poor software resources, and a poor network environment, the audio information output by the terminal device tends to select an audio format signal with a smaller number of audio data channels.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 2. The first score threshold may be, for example, 2. The first audio format signal set may include, for example, the mono signal, the stereo signal, and the metadata-assisted spatial audio signal. In a case that the score 2 is equal to the first score threshold 2, the audio format signal to be selected for audio communication determined by the terminal device from the first audio format signal set may be, for example, the mono signal or the metadata-assisted spatial audio signal.

Further, in an embodiment of the present disclosure, the first score threshold may be a plurality of score thresholds. With different score thresholds, the audio format signals to be selected for audio communication determined from the first audio format signal set may also be different.

For example, in an embodiment of the present disclosure, the first score threshold may include, for example, 1.5 and 2. The first audio format signal set may include, for example, the mono signal, the stereo signal, and the metadata-assisted spatial audio signal. In a case that the terminal device may obtain, based on the condition parameter corresponding to the constraint condition of the terminal device and the weight coefficient corresponding to the constraint condition, the score corresponding to the constraint condition which may be, for example, 1.85, the audio format signal to be selected for audio communication determined by the terminal device from the first audio format signal set may be, for example, the stereo signal. In a case that the terminal device may obtain, based on the condition parameter corresponding to the constraint condition of the terminal device and the weight coefficient corresponding to the constraint condition, the score corresponding to the constraint condition which may be, for example, 1.35, the audio format signal to be selected for audio communication determined by the terminal device from the first audio format signal set may be, for example, the mono signal. In a case that the terminal device may obtain, based on the condition parameter corresponding to the constraint condition of the terminal device and the weight coefficient corresponding to the constraint condition, the score corresponding to the constraint condition which may be, for example, 2.35, the audio format signal to be selected for audio communication determined by the terminal device from the first audio format signal set may be, for example, the metadata-assisted spatial audio signal.

In a word, in an embodiment of the present disclosure, the score corresponding to the constraint condition is obtained based on the condition parameter corresponding to the constraint condition of the terminal device and the weight coefficient corresponding to the constraint condition, in which the constraint condition includes the hardware resource condition of the terminal device, the software resource condition of the terminal device, the network environment condition where the terminal device is, or the electricity quantity of the terminal device. The audio format signal to be selected for the audio communication is determined from the audio format signal set that is able to be provided by the terminal device based on the score. In an embodiment of the present disclosure, the audio format signal to be selected for audio communication may be determined based on the condition parameter corresponding to the constraint condition of the terminal device and the weight coefficient corresponding to the constraint condition, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. An embodiment of the present disclosure specifically describes the solution for determining the audio format signal to be selected for the audio communication from the first audio format signal set based on the score, which may improve the accuracy of determining the audio format signal. The present disclosure provides a processing method for a situation of "audio signal format determination" to determine the audio signal format based on the constraint condition of the terminal device, improving an accuracy of audio format signal determination, and providing an optimal audio service based on the constraint condition.

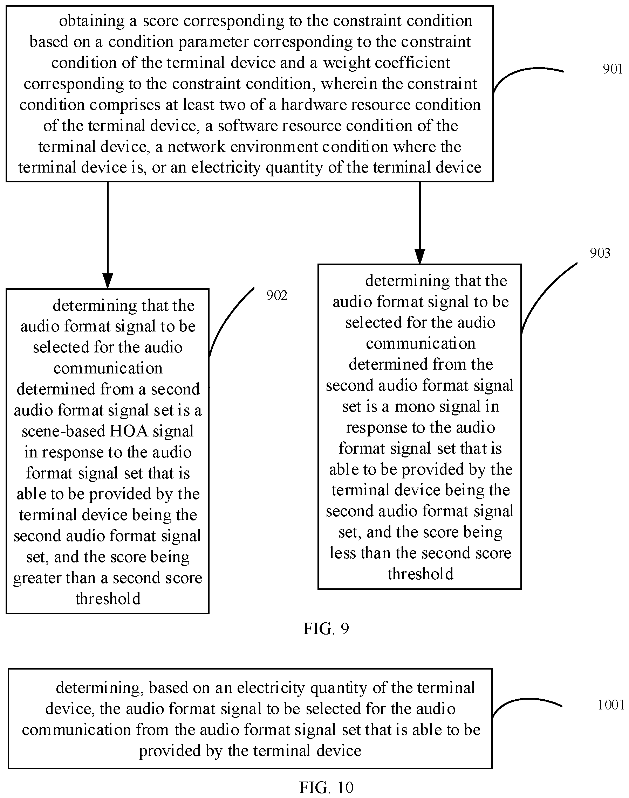

FIG. 9 is a flowchart of a method for audio signal format determination according to an embodiment of the present disclosure. The method is performed by a terminal device. As shown in FIG. 9, the method may include the following steps.

At step 901, a score corresponding to the constraint condition is obtained based on a condition parameter corresponding to the constraint condition of the terminal device and a weight coefficient corresponding to the constraint condition, in which the constraint condition includes at least two of a hardware resource condition of the terminal device, a software resource condition of the terminal device, a network environment condition where the terminal device is, or an electricity quantity of the terminal device.

One of the following steps is performed.

At step 902, it is determined that the audio format signal to be selected for the audio communication determined from a second audio format signal set is a scene-based HOA signal in response to the audio format signal set that is able to be provided by the terminal device being the second audio format signal set, and the score being greater than a second score threshold.

At step 903, it is determined that the audio format signal to be selected for the audio communication determined from the second audio format signal set is a mono signal in response to the audio format signal set that is able to be provided by the terminal device being the second audio format signal set, and the score being less than the second score threshold.

In an embodiment of the present disclosure, the second score threshold refers to a score threshold for the audio format signal to be selected for audio communication determined from the second audio format signal set. The term "second" in the second score threshold is only used to distinguish it from other score thresholds, and does not specifically refer to a fixed score threshold. The second score threshold may be the same as the first score threshold, or may also be different from the first score threshold.

For example, in an embodiment of the present disclosure, in a case the score is equal to the second score threshold, the terminal device may determine the audio format signal to be selected for audio communication according to the solution with the score greater than the second score threshold, or may also determine the audio format signal to be selected for audio communication according to the solution with the score less than the second score threshold. For example, in response to the audio format signal set that is able to be provided by the terminal device being the second audio format signal set, and the score being equal to the second score threshold, the terminal device may determine that the audio format signal to be selected for the audio communication determined from the second audio format signal set may be, for example, the mono signal or the scene-based HOA signal.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 2.55. The second score threshold may be, for example, 2. The second audio format signal set may include, for example, the mono signal, the stereo signal, the scene-based FOA signal, the scene-based HOA signal, and the metadata-assisted spatial audio signal. In a case that the score 2.55 is greater than the second score threshold 2, the audio format signal to be selected for audio communication determined by the terminal device from the second audio format signal set may be, for example, the scene-based HOA signal.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 1.55. The second score threshold may be, for example, 2. The second audio format signal set may include, for example, the mono signal, the stereo signal, the scene-based FOA signal, the scene-based HOA signal, and the metadata-assisted spatial audio signal. In a case that the score 1.55 is less than the second score threshold 2, the audio format signal to be selected for audio communication determined by the terminal device from the second audio format signal set may be, for example, the mono signal.

For example, in an embodiment of the present disclosure, the terminal device may obtain, based on the condition parameter corresponding to the constraint condition of the terminal device and the weight coefficient corresponding to the constraint condition, the score corresponding to the constraint condition which may be, for example, 2. The second score threshold may be, for example, 2. The second audio format signal set may include, for example, the mono signal, the stereo signal, the scene-based FOA signal, the scene-based HOA signal, and the metadata-assisted spatial audio signal. In a case that the score 2 is equal to the second score threshold 2, the audio format signal to be selected for audio communication determined by the terminal device from the second audio format signal set may be, for example, the mono signal or the scene-based HOA signal.

Further, in an embodiment of the present disclosure, the second score threshold may be a plurality of score thresholds. With different score thresholds, the audio format signals to be selected for audio communication determined from the second audio format signal set may also be different.

For example, in an embodiment of the present disclosure, the second score threshold may include, for example, 1.2, 1.5, 1.8 and 2. The second audio format signal set may include, for example, the mono signal, the stereo signal, the scene-based FOA signal, the scene-based HOA signal, and the metadata-assisted spatial audio signal. In a case that the terminal device may obtain, based on the condition parameter corresponding to the constraint condition of the terminal device and the weight coefficient corresponding to the constraint condition, the score corresponding to the constraint condition which may be, for example, 1.85, the audio format signal to be selected for audio communication determined by the terminal device from the second audio format signal set may be, for example, the scene-based FOA signal. In a case that the terminal device may obtain, based on the condition parameter corresponding to the constraint condition of the terminal device and the weight coefficient corresponding to the constraint condition, the score corresponding to the constraint condition which may be, for example, 1.35, the audio format signal to be selected for audio communication determined by the terminal device from the second audio format signal set may be, for example, the stereo signal. In a case that the terminal device may obtain, based on the condition parameter corresponding to the constraint condition of the terminal device and the weight coefficient corresponding to the constraint condition, the score corresponding to the constraint condition which may be, for example, 2.35, the audio format signal to be selected for audio communication determined by the terminal device from the second audio format signal set may be, for example, the scene-based HOA signal. In a case that the terminal device may obtain, based on the condition parameter corresponding to the constraint condition of the terminal device and the weight coefficient corresponding to the constraint condition, the score corresponding to the constraint condition which may be, for example, 1.15, the audio format signal to be selected for audio communication determined by the terminal device from the second audio format signal set may be, for example, the mono signal. In a case that the terminal device may obtain, based on the condition parameter corresponding to the constraint condition of the terminal device and the weight coefficient corresponding to the constraint condition, the score corresponding to the constraint condition which may be, for example, 1.6, the audio format signal to be selected for audio communication determined by the terminal device from the second audio format signal set may be, for example, the metadata-assisted spatial audio signal.

In a word, in an embodiment of the present disclosure, the score corresponding to the constraint condition is obtained based on the condition parameter corresponding to the constraint condition of the terminal device and the weight coefficient corresponding to the constraint condition, in which the constraint condition includes the hardware resource condition of the terminal device, the software resource condition of the terminal device, the network environment condition where the terminal device is, or the electricity quantity of the terminal device. The audio format signal to be selected for the audio communication is determined from the audio format signal set that is able to be provided by the terminal device based on the score. In an embodiment of the present disclosure, the audio format signal to be selected for audio communication may be determined based on the condition parameter corresponding to the constraint condition of the terminal device and the weight coefficient corresponding to the constraint condition, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. An embodiment of the present disclosure specifically describes the solution for determining the audio format signal to be selected for the audio communication from the second audio format signal set based on the score, which may improve the accuracy of determining the audio format signal. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 10 is a flowchart of a method for audio signal format determination according to an embodiment of the present disclosure. The method is performed by a terminal device. As shown in FIG. 10, the method may include the following steps.

At step 1001, it is determined, based on an electricity quantity of the terminal device, the audio format signal to be selected for the audio communication from the audio format signal set that is able to be provided by the terminal device.

In an embodiment of the present disclosure, the constraint condition of the terminal device may be, for example, the electricity quantity of the terminal device. Based on the electricity quantity of the terminal device, the terminal device may determine the audio format signal to be selected for audio communication from the audio format signal set that is able to be provided by the terminal device.

**In** a word, in an embodiment of the present disclosure, the audio format signal to be selected for the audio communication is determined from the audio format signal set that is able to be provided by the terminal device based on the electricity quantity of the terminal device. In an embodiment of the present disclosure, the audio format signal to be selected for the audio communication may be determined based on the electricity quantity of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. The present disclosure provides a processing method for a situation of "audio signal format determination" to determine the audio signal format based on the constraint condition of the terminal device, improving an accuracy of audio format signal determination, and providing an optimal audio service based on the constraint condition.

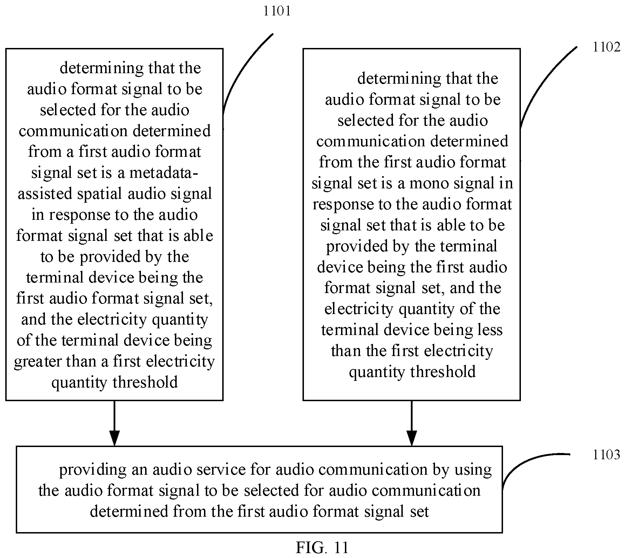

FIG. 11 is a flowchart of a method for audio signal format determination according to an embodiment of the present disclosure. The method is performed by a terminal device. As shown in FIG. 11, the method may include the following steps.

The following steps 1101 and 1102 may be executed alternatively.

At step 1101, it is determined that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold.

At step 1102, it is determined that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold.

At step 1103, an audio service for audio communication is provided by using the audio format signal to be selected for audio communication determined from the first audio format signal set.

In an embodiment of the present disclosure, the first electricity quantity threshold refers to an electricity quantity threshold for the audio format signal to be selected for audio communication determined in the first audio format signal set. The term "first" in the first electricity quantity threshold is only used to distinguish it from other electricity quantity thresholds, and does not specifically refer to a fixed electricity quantity threshold.

In an embodiment of the present disclosure, in a case the electricity quantity of the terminal device is equal to the first electricity quantity threshold, the terminal device may determine the audio format signal to be selected for audio communication according to the solution with the electricity quantity of the terminal device greater than the first electricity quantity threshold, or may also determine the audio format signal to be selected for audio communication according to the solution with the electricity quantity of the terminal device less than the first electricity quantity threshold. For example, in response to the audio format signal set that is able to be provided by the terminal device being the first audio format signal set, and the electricity quantity of the terminal device being equal to the first electricity quantity threshold, the terminal device may determine that the audio format signal to be selected for the audio communication determined from the first audio format signal set may be, for example, the mono signal or the metadata-assisted spatial audio signal.

For example, in an embodiment of the present disclosure, the first audio format signal set may include, for example, the mono signal, the stereo signal, and the metadata-assisted spatial audio signal. The first electricity quantity threshold may be, for example, 20% of a total electricity quantity of the terminal device. The total electricity quantity is an electricity quantity when a battery of the terminal device is fully charged. In response to the audio format signal set that is able to be provided by the terminal device being the first audio format signal set, and the electricity quantity 15% of the terminal device being less than the first electricity quantity threshold 20%, the audio format signal to be selected for the audio communication determined from the first audio format signal set may be, for example, the mono signal, which may extend a battery life of the terminal device.

For example, in an embodiment of the present disclosure, the first audio format signal set may include, for example, the mono signal, the stereo signal, and the metadata-assisted spatial audio signal. The first electricity quantity threshold may be, for example, 20% of a total electricity quantity of the terminal device. The total electricity quantity is an electricity quantity when a battery of the terminal device is fully charged. In response to the audio format signal set that is able to be provided by the terminal device being the first audio format signal set, and the electricity quantity 50% of the terminal device being greater than the first electricity quantity threshold 20%, the audio format signal to be selected for the audio communication determined from the first audio format signal set may be, for example, the metadata-assisted spatial audio signal.

Further, in an embodiment of the present disclosure, the first electricity quantity threshold may be a plurality of electricity quantity thresholds. With different electricity quantity thresholds, the audio format signals to be selected for audio communication determined from the first audio format signal set may also be different.

For example, in an embodiment of the present disclosure, the first electricity quantity threshold may include, for example, 20% and 40%. The first audio format signal set may include, for example, the mono signal, the stereo signal, and the metadata-assisted spatial audio signal. The electricity quantity of the terminal device may be, for example, 30%, the audio format signal to be selected for audio communication determined by the terminal device from the first audio format signal set may be, for example, the stereo signal. The electricity quantity of the terminal device may be, for example, 15%, the audio format signal to be selected for audio communication determined by the terminal device from the first audio format signal set may be, for example, the mono signal. The electricity quantity of the terminal device may be, for example, 50%, the audio format signal to be selected for audio communication determined by the terminal device from the first audio format signal set may be, for example, the metadata-assisted spatial audio signal.

**In** a word, in an embodiment of the present disclosure, the audio format signal to be selected for the audio communication is determined from the audio format signal set that is able to be provided by the terminal device based on the electricity quantity of the terminal device. In an embodiment of the present disclosure, the audio format signal to be selected for the audio communication may be determined based on the electricity quantity of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. An embodiment of the present disclosure specifically describes the solution for determining the audio format signal to be selected for the audio communication from the first audio format signal set based on the electricity quantity of the terminal device, which may improve the accuracy of determining the audio format signal. The present disclosure provides a processing method for a situation of "audio signal format determination" to determine the audio signal format based on the constraint condition of the terminal device, improving an accuracy of audio format signal determination, and providing an optimal audio service based on the constraint condition.

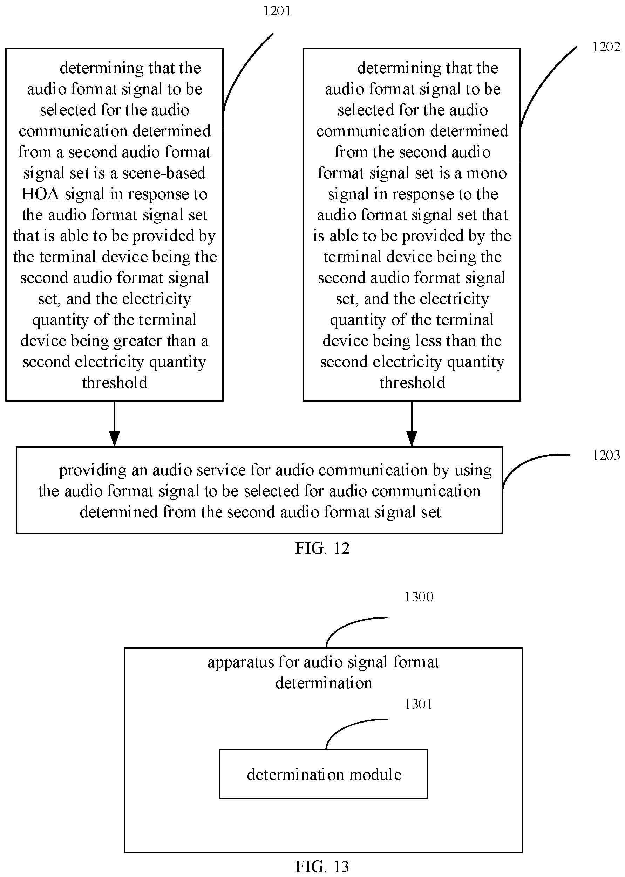

FIG. 12 is a flowchart of a method for audio signal format determination according to an embodiment of the present disclosure. The method is performed by a terminal device. As shown in FIG. 12, the method may include the following steps.

The following steps 1201 and 1202 may be executed alternatively.

At step 1201, it is determined that that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold.

At step 1202, it is determined that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold.

At step 1203, an audio service for audio communication is provided by using the audio format signal to be selected for audio communication determined from the second audio format signal set.

In an embodiment of the present disclosure, the second electricity quantity threshold refers to an electricity quantity threshold for the audio format signal to be selected for audio communication determined from the second audio format signal set. The term "second" in the second electricity quantity threshold is only used to distinguish it from other electricity quantity thresholds, and does not specifically refer to a fixed electricity quantity threshold. The second electricity quantity threshold may be the same as the first electricity quantity threshold, or may be different from the first electricity quantity threshold.

In an embodiment of the present disclosure, in a case the electricity quantity of the terminal device is equal to the second electricity quantity threshold, the terminal device may determine the audio format signal to be selected for audio communication according to the solution with the electricity quantity of the terminal device greater than the second electricity quantity threshold, or may also determine the audio format signal to be selected for audio communication according to the solution with the electricity quantity of the terminal device less than the second electricity quantity threshold. For example, in response to the audio format signal set that is able to be provided by the terminal device being the second audio format signal set, and the electricity quantity of the terminal device being equal to the second electricity quantity threshold, the terminal device may determine that the audio format signal to be selected for the audio communication determined from the second audio format signal set may be, for example, the mono signal or the scene-based HOA signal.

For example, in an embodiment of the present disclosure, the second audio format signal set may include, for example, the mono signal, the stereo signal, the scene-based FOA signal, the scene-based HOA signal, and the metadata-assisted spatial audio signal. The second electricity quantity threshold may be, for example, 20% of a total electricity quantity of the terminal device. The total electricity quantity is an electricity quantity when a battery of the terminal device is fully charged. In response to the audio format signal set that is able to be provided by the terminal device being the second audio format signal set, and the electricity quantity 15% of the terminal device being less than the second electricity quantity threshold 20%, the audio format signal to be selected for the audio communication determined from the second audio format signal set may be, for example, the mono signal, which may extend a battery life of the terminal device.

For example, in an embodiment of the present disclosure, the second audio format signal set may include, for example, the mono signal, the stereo signal, the scene-based FOA signal, the scene-based HOA signal, and the metadata-assisted spatial audio signal. The second electricity quantity threshold may be, for example, 20% of a total electricity quantity of the terminal device. The total electricity quantity is an electricity quantity when a battery of the terminal device is fully charged. In response to the audio format signal set that is able to be provided by the terminal device being the second audio format signal set, and the electricity quantity 50% of the terminal device being greater than the second electricity quantity threshold 20%, the audio format signal to be selected for the audio communication determined from the second audio format signal set may be, for example, the scene-based HOA signal.

Further, in an embodiment of the present disclosure, the second electricity quantity threshold may be a plurality of electricity quantity thresholds. With different electricity quantity thresholds, the audio format signals to be selected for audio communication determined from the second audio format signal set may also be different.

For example, in an embodiment of the present disclosure, the second electricity quantity threshold may include, for example, 20%, 40%, 60%, and 75%. The second audio format signal set may include, for example, the mono signal, the stereo signal, the scene-based FOA signal, the scene-based HOA signal, and the metadata-assisted spatial audio signal. The electricity quantity of the terminal device may be, for example, 15%, the audio format signal to be selected for audio communication determined by the terminal device from the second audio format signal set may be, for example, the mono signal. The electricity quantity of the terminal device may be, for example, 25%, the audio format signal to be selected for audio communication determined by the terminal device from the second audio format signal set may be, for example, the stereo signal. The electricity quantity of the terminal device may be, for example, 55%, the audio format signal to be selected for audio communication determined by the terminal device from the second audio format signal set may be, for example, the metadata-assisted spatial audio signal. The electricity quantity of the terminal device may be, for example, 65%, the audio format signal to be selected for audio communication determined by the terminal device from the second audio format signal set may be, for example, the scene-based FOA signal. The electricity quantity of the terminal device may be, for example, 85%, the audio format signal to be selected for audio communication determined by the terminal device from the second audio format signal set may be, for example, the scene-based HOA signal.

In a word, in an embodiment of the present disclosure, the audio format signal to be selected for the audio communication is determined from the audio format signal set that is able to be provided by the terminal device based on the electricity quantity of the terminal device. In an embodiment of the present disclosure, the audio format signal to be selected for the audio communication may be determined based on the electricity quantity of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. An embodiment of the present disclosure specifically describes the solution for determining the audio format signal to be selected for the audio communication from the second audio format signal set based on the electricity quantity of the terminal device, which may improve the accuracy of determining the audio format signal. The present disclosure provides a processing method for a situation of "audio signal format determination" to determine the audio signal format based on the constraint condition of the terminal device, improving an accuracy of audio format signal determination, and providing an optimal audio service based on the constraint condition.

FIG. 13 is a block diagram showing an apparatus for audio signal format determination according to still yet another embodiment of the present disclosure. As shown in FIG. 13, the apparatus 1300 may include a determination module 1301.

The determination module 1301 is configured to determine, based on a constraint condition of the terminal device, an audio format signal to be selected for audio communication from an audio format signal set that is able to be provided by the terminal device, in which, the audio format signal to be selected is configured to provide an audio service of the audio communication, the audio format signal set includes at least one audio format signal.

In a word, in the apparatus of embodiments of the present disclosure, the determination module may determine, based on a constraint condition of the terminal device, the audio format signal to be selected for audio communication from the audio format signal set that is able to be provided by the terminal device, in which, the audio format signal to be selected is configured to provide the audio service of the audio communication, the audio format signal set includes the at least one audio format signal. In an embodiment of the present disclosure, the audio format signal to be selected for the audio communication may be determined based on the constraint condition of the terminal device, which may improve matching between the audio format signal and the constraint condition and reduce a situation where lower accuracy of audio format signal determination caused by directly determining the audio format signal without considering the constraint condition of the terminal device. The accuracy of the audio format signal determination may be improved, and an audio service of the audio communication may be improved. The present disclosure provides a processing method for a situation of "audio signal format determination" to determine the audio signal format based on the constraint condition of the terminal device, improving an accuracy of audio format signal determination, and providing an optimal audio service based on the constraint condition.

In one embodiment of the present disclosure, the constraint condition of the terminal device includes at least one of:

a hardware resource condition of the terminal device;
a software resource condition of the terminal device;

a network environment condition where the terminal device is; or
an electricity quantity of the terminal device.

In one embodiment of the present disclosure, the determination module 1301 is configured to: determine, based on a microphone number and/or a microphone type configured by the terminal device, the audio format signal set that is able to be provided by the terminal device.

In one embodiment of the present disclosure, determination module 1301 is configured to determine, based on the microphone number and/or the microphone type configured by the terminal device, the audio format signal set that is able to be provided by the terminal device, which is specifically configured to:

determine the audio format signal set that is able to be provided by the terminal device as a first audio format signal set in response to the microphone number configured by the terminal device being at least three,;
in which, an audio format signal in the first audio format signal set includes at least one of:

a mono signal;
a stereo signal;
a metadata-assisted spatial audio signal;
a scene-based first-order ambisonics (FOA) signal;
a scene-based high-order ambisonics (HOA) signal; or
a multi-channel signal.

In one embodiment of the present disclosure, the determination module 1301 is configured to determine, based on the microphone number and/or the microphone type configured by the terminal device, the audio format signal set that is able to be provided by the terminal device, which is configured to:

determine the audio format signal set that is able to be provided by the terminal device as a second audio format signal set in response to a microphone configured by the terminal device comprising at least one external audio acquisition device;
in which, an audio format signal in the second audio format signal set includes at least one of:

a mono signal;
a stereo signal;
a binaural signal;
an objective signal;
a metadata-assisted spatial audio signal;
a scene-based FOA signal;
a scene-based HOA signal; or
a multi-channel signal.

In one embodiment of the present disclosure, the determination module 1301 is configured to determine, based on the constraint condition of the terminal device, the audio format signal to be selected for the audio communication from the audio format signal set that is able to be provided by the terminal device, which is configured to:

obtain a score corresponding to the constraint condition based on a condition parameter corresponding to the constraint condition of the terminal device and a weight coefficient corresponding to the constraint condition, in which the constraint condition includes a hardware resource condition of the terminal device, a software resource condition of the terminal device, a network environment condition where the terminal device is, or an electricity quantity of the terminal device;
determine, based on the score, the audio format signal to be selected for the audio communication from the audio format signal set that is able to be provided by the terminal device.

In one embodiment of the present disclosure, the determination module 1301 is configured to determine, based on the score, the audio format signal to be selected for the audio communication from the audio format signal set that is able to be provided by the terminal device, which is specifically configured to:

determine that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold; or

determine that the audio format signal to be selected for the audio communication determined from the first audio format signal set is a mono signal in response to the audio format signal set that is able to be provided by the terminal device being the first audio format signal set, and the score being less than the first score threshold.

In one embodiment of the present disclosure, the determination module 1301 is configured to determine, based on the score, the audio format signal to be selected for the audio communication from the audio format signal set that is able to be provided by the terminal device, which is specifically configured to:

determine that the audio format signal to be selected for the audio communication determined from a second audio format signal set is a scene-based HOA signal in response to the audio format signal set that is able to be provided by the terminal device being the second audio format signal set, and the score being greater than a second score threshold; or

determine that the audio format signal to be selected for the audio communication determined from the second audio format signal set is a mono signal in response to the audio format signal set that is able to be provided by the terminal device being the second audio format signal set, and the score being less than the second score threshold.

In one embodiment of the present disclosure, the determination module 1301 is configured to determine, based on the constraint condition of the terminal device, the audio format signal to be selected for the audio communication from the audio format signal set that is able to be provided by the terminal device, which is specifically configured to:
determine, based on an electricity quantity of the terminal device, the audio format signal to be selected for the audio communication from the audio format signal set that is able to be provided by the terminal device.

In one embodiment of the present disclosure, the determination module 1301 is configured to determine, based on the electricity quantity of the terminal device, the audio format signal to be selected for the audio communication from the audio format signal set that is able to be provided by the terminal device , which is specifically configured to:

determine that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold; or

determine that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold.

In one embodiment of the present disclosure, the determination module 1301 is configured to determine, based on the electricity quantity of the terminal device, the audio format signal to be selected for the audio communication from the audio format signal set that is able to be provided by the terminal device, which is configured to:

determine that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold; or

determine that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold.

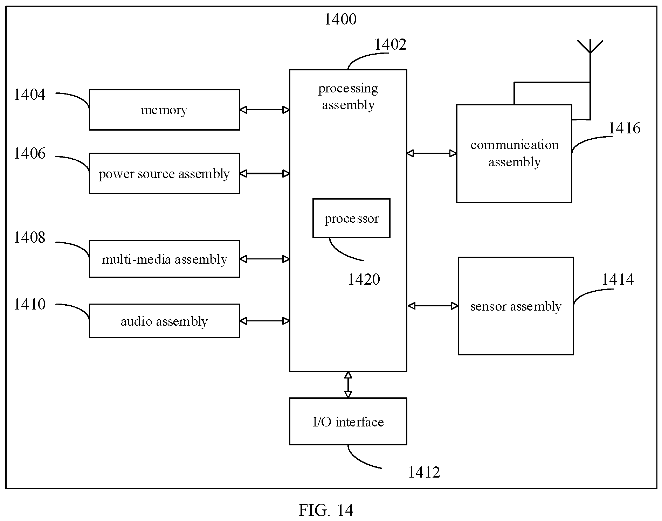

FIG. 14 is a block diagram showing a terminal device (UE) 1400 according to an embodiment of the present disclosure. For example, the UE 1400 is a mobile phone, a computer, a digital broadcasting terminal device, a message transceiver device, a game console, a pad device, a medical equipment, a fitness equipment, or a personal digital assistant, etc.

As shown in FIG. 14, the UE 1400 includes at least one of following assemblies: a processing assembly 1402, a memory 1404, a power source assembly 1406, a multi-media assembly 1408, an audio assembly 1410, an Input/Output (I/O) interface 1412, a sensor assembly 1414, and a communication assembly 1416.

The processing assembly 1402 controls an entire operation of the UE 1400, e.g., operations associated with display, phone call, data communication, camera operation and recording operation. The processing assembly 1402 includes at least one processor 1420 to execute an instruction, so as to implement all of, or a part of, the steps of the above-mentioned method. In addition, the processing assembly 1402 includes at least one module for the interaction between the processing assembly 1402 and the other assembly. For example, the processing assembly 1402 includes a multi-media module for the interaction between the multi-media assembly 1408 and the processing assembly 1402.

The memory 1404 is configured to store therein various types of data to support the operation of the UE 1400. Examples of such data include instructions for any application or method operated on the UE 1400, contact data, phonebook data, messages, pictures, video, etc. The memory 1404 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 1406 provides power to various assemblies of the UE 1400. The power source assembly 1406 may include a power management system, one or more power sources, and any other assemblies associated with the generation, management and distribution of power in the UE 1400.

The multi-media assembly 1408 includes a screen for providing an output interface between the UE 1400 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 1408 includes a front-facing camera and/or a rear-facing camera. When the UE 1400 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 1410 is configured to output and/or input audio signals. For example, the audio assembly 1410 includes a microphone (MIC) configured to receive an external audio signal when the UE 1400 is in an operating mode, such as a call mode, a recording mode, and a voice recognition mode. The received audio signal may be further stored in the memory 1404 or transmitted via the communication assembly 1416. In some embodiments of the present disclosure, the audio assembly 1410 further includes a speaker to output audio signals.

The I/O interface 1412 provides an interface between the processing assembly 1402 and peripheral interface modules, such as a keyboard, a click wheel, buttons, and the like. The buttons may include, but not limited to, a home button, a volume button, a starting button, and a locking button.

The sensor assembly 1414 includes one or more sensors to provide status assessments about various aspects of the UE 1400. for example, the sensor assembly 1414 may detect an open/closed status of the UE 1400, relative positioning of assemblies, e.g., the display and the keypad, of the UE 1400, a change in a position of the UE 1400 or an assembly of the UE 1400, a presence or absence of user contact with the UE 1400, an orientation or an acceleration/deceleration of the UE 1400, and a change in a temperature of the UE 1400. The sensor assembly 1414 may include a proximity sensor configured to detect the presence of nearby objects without any physical contact. The sensor assembly 1414 may also include a light sensor, such as a Complementary Metal Oxide Semiconductor (CMOS) or Charge-Coupled Device (CCD) image sensor, for use in imaging applications. In some embodiments of the present disclosure, the sensor assembly 1414 may also include an accelerometer sensor, a gyroscope sensor, a magnetic sensor, a pressure sensor, or a temperature sensor.

The communication assembly 1416 is configured to facilitate wired or wireless communication between the UE 1400 and other devices. The UE 1400 may access a wireless network based on a communication standard, such as Wi-Fi, 2G or 3G, or a combination thereof. In an exemplary embodiment of the present disclosure, the communication assembly 1416 receives a broadcast signal or broadcast associated information from an external broadcast management system via a broadcast channel. In an exemplary embodiment of the present disclosure, the communication assembly 1416 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Bluetooth (BT) technology, and other technologies.

In the exemplary embodiment of the present disclosure, the UE 1400 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or the combination thereof. A certain function in these functions is executed the method through the hardware structure, the software module, or the combination thereof.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or the combination thereof. A certain function in these functions is executed the method through the hardware structure, the software module, or the combination thereof.

The present disclosure further provides in some embodiments a communication apparatus, which includes a transceiver module and a processing module. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus may be a terminal device (e.g., the terminal device mentioned hereinabove), an apparatus in the terminal device, or an apparatus capable of being used in combination with the terminal device. Alternatively, the communication apparatus may be a network device, an apparatus in the network device, or an apparatus capable of being used in combination with the network device.

The present disclosure further provides in some embodiments another communication apparatus. The communication apparatus may be a network device, a terminal device (e.g., the terminal device mentioned hereinabove), or a chip, a chip system or a processor which supports the network device to achieve the above-mentioned method, or a chip, a chip system or a processor which supports the terminal device to achieve the above-mentioned method. The apparatus is used to achieve the above-mentioned method, which will not be particularly defined herein.

The communication apparatus may include one or more processors. The processor may be a general-purpose processor or special-purpose processor, e.g., a baseband processor or a Central Processing Unit (CPU). The baseband processor is configured to process a communication protocol as well as communication data, and the CPU is configured to control the communication apparatus (e.g., a network side device, a baseband chip, a terminal device, a terminal device chip, a Distributed Unit (DU) or a Centralized Unit (CU)), execute a computer program, and process data in the computer program.

Optionally, the communication apparatus further includes one or more memories storing therein a computer program. The computer program is executed by the processor, so that the communication apparatus executes the above-mentioned method. Optionally, the memory further stores therein data. The communication apparatus is arranged independent of, or integrated with, the memory.

Optionally, the communication apparatus further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus further includes one or more interface circuits. The interface circuit is configured to receive a code instruction and transmit it to the processor. The processor executes the code instruction, so that the communication apparatus implements the above-mentioned method.

In a case that the communication apparatus is a terminal device (e.g., the terminal device in the above-mentioned method embodiment), the processor is configure to implement the method in any of FIGs. 1 to 12.

Optionally, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

Optionally, the processor stores therein a computer program, and the computer program is executed by the processor, so that the communication apparatus implements the above-mentioned method. The computer program may be programmed in the processor, and in this case, the processor may be implemented through hardware.

Optionally, the communication apparatus includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device (e.g., the terminal device mentioned hereinabove), but the scope of the communication apparatus is not limited thereto. In addition, a structure of the communication apparatus will not be particularly defined herein. The communication apparatus may be an independent device, or a part of a large device. For example, the communication apparatus may be:

(1) an independent IC, chip, chip system or chip sub-system;
(2) a set of one or more ICs (optionally, the IC set also includes a memory member for storing therein data and a computer program;
(3) an ASIC, e.g., a Modem;
(4) a module capable of being embedded into the other device;
(5) a receiver, a terminal device, a smart terminal device, a cellular phone, a wireless device, a handheld device, a mobile unit, a vehicle-mounted device, a network device, a cloud device, an artificial intelligence device, etc.; or
(6) the other device.

In a case that the communication apparatus is a chip or a chip system, the chip includes a processor and an interface. There may exist one or more processors, and more than one interface.

Optionally, the chip further includes a memory for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

**Claims**

1. A method for audio signal format determination, performed by a terminal device, comprising:
   determining, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal.

2. The method according to claim 1, wherein the constraint condition of the terminal device comprises at least one of:

   a hardware resource condition of the terminal device;
   a software resource condition of the terminal device;
   a network environment condition where the terminal device is; or
   an electricity quantity of the terminal device.

3. The method according to claim 1, further comprising:
   determining, based on a microphone number and/or a microphone type configured by the terminal device, the audio format signal set that is able to be provided by the terminal device.

4. The method according to claim 3, wherein determining, based on the microphone number and/or the microphone type configured by the terminal device, the audio format signal set that is able to be provided by the terminal device comprises:

   determining the audio format signal set that is able to be provided by the terminal device as a first audio format signal set in response to the microphone number configured by the terminal device being at least three;
   wherein an audio format signal in the first audio format signal set comprises at least one of:

   a mono signal;
   a stereo signal;
   a metadata-assisted spatial audio signal;
   a scene-based first-order ambisonics (FOA) signal;
   a scene-based high-order ambisonics (HOA) signal; or
   a multi-channel signal.

5. The method according to claim 3, wherein determining, based on the microphone number and/or the microphone type configured by the terminal device, the audio format signal set that is able to be provided by the terminal device comprises:

   determining the audio format signal set that is able to be provided by the terminal device as a second audio format signal set in response to a microphone configured by the terminal device comprising at least one external audio acquisition device;
   wherein an audio format signal in the second audio format signal set comprises at least one of:

   a mono signal;
   a stereo signal;
   a binaural signal;
   an objective signal;
   a metadata-assisted spatial audio signal;
   a scene-based FOA signal;
   a scene-based HOA signal; or
   a multi-channel signal.

6. The method according to claim 1, wherein determining, based on the constraint condition of the terminal device, the audio format signal to be selected for the audio communication from the audio format signal set that is able to be provided by the terminal device comprises:

   obtaining a score corresponding to the constraint condition based on a condition parameter corresponding to the constraint condition of the terminal device and a weight coefficient corresponding to the constraint condition, wherein the constraint condition comprises a hardware resource condition of the terminal device, a software resource condition of the terminal device, a network environment condition where the terminal device is, or an electricity quantity of the terminal device;

determining, based on the score, the audio format signal to be selected for the audio communication from the audio format signal set that is able to be provided by the terminal device.

7. The method according to claim 6, wherein determining, based on the score, the audio format signal to be selected for the audio communication from the audio format signal set that is able to be provided by the terminal device comprises:

determining that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold; or

determining that the audio format signal to be selected for the audio communication determined from the first audio format signal set is a mono signal in response to the audio format signal set that is able to be provided by the terminal device being the first audio format signal set, and the score being less than the first score threshold.

8. The method according to claim 6, wherein determining, based on the score, the audio format signal to be selected for the audio communication from the audio format signal set that is able to be provided by the terminal device comprises:

determining that the audio format signal to be selected for the audio communication determined from a second audio format signal set is a scene-based HOA signal in response to the audio format signal set that is able to be provided by the terminal device being the second audio format signal set, and the score being greater than a second score threshold; or

determining that the audio format signal to be selected for the audio communication determined from the second audio format signal set is a mono signal in response to the audio format signal set that is able to be provided by the terminal device being the second audio format signal set, and the score being less than the second score threshold.

9. The method according to claim 1, wherein determining, based on the constraint condition of the terminal device, the audio format signal to be selected for the audio communication from the audio format signal set that is able to be provided by the terminal device comprises:

determining, based on an electricity quantity of the terminal device, the audio format signal to be selected for the audio communication from the audio format signal set that is able to be provided by the terminal device.

10. The method according to claim 9, wherein determining, based on the electricity quantity of the terminal device, the audio format signal to be selected for the audio communication from the audio format signal set that is able to be provided by the terminal device comprises:

determining that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold; or

determining that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold.

11. The method according to claim 9, wherein determining, based on the electricity quantity of the terminal device, the audio format signal to be selected for the audio communication from the audio format signal set that is able to be provided by the terminal device comprises:

determining that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold; or

determining that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold.

12. An apparatus for audio signal format determination, comprising:

a determination module, configured to determine, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal.

13. A terminal device, comprising a processor and a memory, wherein the memory is configured to store therein a computer program, and the processor is configured to execute the computer program stored in the memory, causing the device to implement the method according to any one of claims 1 to 11.

14. A communication apparatus, comprising a processor and an interface circuit, wherein

the interface circuit is configured to receive a code instruction and transmit the code instruction to the processor; and
the processor is configured to run the code instruction to implement the method according to any one of claims 1 to 11.

15. A computer-readable storage medium storing therein instructions, wherein, when the instructions are executed, the method according to any one of claims 1 to 11 is implemented.

determining, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal

101

FIG. 1

determining, based on a microphone number and/or a microphone type configured by the terminal device, the audio format signal set that is able to be provided by the terminal device

201

determining, based on a constraint condition of the terminal device, an audio format signal to be selected for audio communication from an audio format signal set that is able to be provided by the terminal device, wherein the audio format signal to be selected is configured to provide an audio service of the audio communication, the audio format signal set comprises at least one audio format signal

202

FIG. 2

determining the audio format signal set that is able to be provided by the terminal device as a first audio format signal set in response to the microphone number configured by the terminal device being at least three

301

determining, based on a constraint condition of the terminal device, an audio format signal to be selected for audio communication from a first audio format signal set that is able to be provided by the terminal device, wherein the audio format signal to be selected is configured to provide an audio service of the audio communication, the audio format signal set comprises at least one audio format signal

302

FIG. 3

microphone 1

microph one 2

microph one 3

FIG. 4

determining the audio format signal set that is able to be provided by the terminal device as a second audio format signal set in response to a microphone configured by the terminal device comprising at least one external audio acquisition device — 501

determining, based on a constraint condition of the terminal device, an audio format signal to be selected for audio communication from a second audio format signal set that is able to be provided by the terminal device, wherein the audio format signal to be selected is configured to provide an audio service of the audio communication, the audio format signal set comprises at least one audio format signal — 502

FIG. 5

acqusition ball

FIG. 6

obtaining a score corresponding to the constraint condition based on a condition parameter corresponding to the constraint condition of the terminal device and a weight coefficient corresponding to the constraint condition, wherein the constraint condition comprises at least two of a hardware resource condition of the terminal device, a software resource condition of the terminal device, a network environment condition where the terminal device is, or an electricity quantity of the terminal device

701

determining, based on the score, the audio format signal to be selected for the audio communication from the audio format signal set that is able to be provided by the terminal device

702

FIG. 7

obtaining a score corresponding to the constraint condition based on a condition parameter corresponding to the constraint condition of the terminal device and a weight coefficient corresponding to the constraint condition, wherein the constraint condition comprises at least two of a hardware resource condition of the terminal device, a software resource condition of the terminal device, a network environment condition where the terminal device is, or an electricity quantity of the terminal device

801

determining that the audio format signal to be selected for the audio communication determined from a first audio format signal set is a metadata-assisted spatial audio signal in response to the audio format signal set that is able to be provided by the terminal device being the first audio format signal set, and the score being greater than a first score threshold

802

determining that the audio format signal to be selected for the audio communication determined from the first audio format signal set is a mono signal in response to the audio format signal set that is able to be provided by the terminal device being the first audio format signal set, and the score being less than the first score threshold

803

FIG. 8

obtaining a score corresponding to the constraint condition based on a condition parameter corresponding to the constraint condition of the terminal device and a weight coefficient corresponding to the constraint condition, wherein the constraint condition comprises at least two of a hardware resource condition of the terminal device, a software resource condition of the terminal device, a network environment condition where the terminal device is, or an electricity quantity of the terminal device

901

determining that the audio format signal to be selected for the audio communication determined from a second audio format signal set is a scene-based HOA signal in response to the audio format signal set that is able to be provided by the terminal device being the second audio format signal set, and the score being greater than a second score threshold

902

determining that the audio format signal to be selected for the audio communication determined from the second audio format signal set is a mono signal in response to the audio format signal set that is able to be provided by the terminal device being the second audio format signal set, and the score being less than the second score threshold

903

FIG. 9

determining, based on an electricity quantity of the terminal device, the audio format signal to be selected for the audio communication from the audio format signal set that is able to be provided by the terminal device

1001

FIG. 10

1101

determining that the audio format signal to be selected for the audio communication determined from a first audio format signal set is a metadata-assisted spatial audio signal in response to the audio format signal set that is able to be provided by the terminal device being the first audio format signal set, and the electricity quantity of the terminal device being greater than a first electricity quantity threshold

1102

determining that the audio format signal to be selected for the audio communication determined from the first audio format signal set is a mono signal in response to the audio format signal set that is able to be provided by the terminal device being the first audio format signal set, and the electricity quantity of the terminal device being less than the first electricity quantity threshold

1103

providing an audio service for audio communication by using the audio format signal to be selected for audio communication determined from the first audio format signal set

FIG. 11

1201

| determining that the audio format signal to be selected for the audio communication determined from a second audio format signal set is a scene-based HOA signal in response to the audio format signal set that is able to be provided by the terminal device being the second audio format signal set, and the electricity quantity of the terminal device being greater than a second electricity quantity threshold |
|---|

1202

| determining that the audio format signal to be selected for the audio communication determined from the second audio format signal set is a mono signal in response to the audio format signal set that is able to be provided by the terminal device being the second audio format signal set, and the electricity quantity of the terminal device being less than the second electricity quantity threshold |
|---|

1203

| providing an audio service for audio communication by using the audio format signal to be selected for audio communication determined from the second audio format signal set |
|---|

FIG. 12

1300

apparatus for audio signal format determination

1301

| determination module |
|---|

FIG. 13

1400

1402

1404 memory

1406 power source assembly

processing assembly

communication assembly 1416

processor

1408 multi-media assembly

1420

1410 audio assembly

sensor assembly 1414

I/O interface

1412

FIG. 14

| INTERNATIONAL SEARCH REPORT | International application No. |
|---|---|
| | **PCT/CN2022/099626** |

**A. CLASSIFICATION OF SUBJECT MATTER**

H04N 21/81(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, WPI, EPODOC, CNKI: 音频信号, 格式, 立体声, 选择, 确定, 约束, 条件, 硬件, 终端, 软件, 移动设备, 用户设备, audio signal, format, stereo, select, choose, determine, constraint, condition, hardware, terminal, software, mobile equipment, user equipment, UE

**C. DOCUMENTS CONSIDERED TO BE RELEVANT**

| Category* | Citation of document, with indication, where appropriate, of the relevant passages | Relevant to claim No. |
|---|---|---|
| X | US 2021219028 A1 (HUAWEI TECHNOLOGIES CO., LTD.) 15 July 2021 (2021-07-15) description, paragraphs 0005-0024, and 0033-0054 | 1-15 |
| X | CN 103544956 A (TCL CORP.) 29 January 2014 (2014-01-29) description, paragraphs 0021-0033 | 1-15 |
| A | CN 114285910 A (BEST TONE INFORMATION SERVICE CO., LTD.) 05 April 2022 (2022-04-05) entire document | 1-15 |
| A | CN 113347530 A (SUZHOU HONGHU QIJI ELECTRONIC TECHNOLOGY CO., LTD.) 03 September 2021 (2021-09-03) entire document | 1-15 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 December 2022** | **20 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/099626**

| Patent document cited in search report | | | Publication date (day/month/year) | Patent family member(s) | | | Publication date (day/month/year) |
|---|---|---|---|---|---|---|---|
| US | 2021219028 | A1 | 15 July 2021 | EP | 3783906 | A4 | 24 February 2021 |
| | | | | WO | 2019227308 | A1 | 05 December 2019 |
| CN | 103544956 | A | 29 January 2014 | None | | | |
| CN | 114285910 | A | 05 April 2022 | None | | | |
| CN | 113347530 | A | 03 September 2021 | None | | | |

Form PCT/ISA/210 (patent family annex) (January 2015)